Europäisches Patentamt

European Patent Office

Office européen des brevets

(11) Veröffentlichungsnummer : **0 150 242**
B1

# EUROPÄISCHE PATENTSCHRIFT

(45) Veröffentlichungstag der Patentschrift :
29.07.87

(21) Anmeldenummer : 84100900.4

(22) Anmeldetag : 28.01.84

(51) Int. Cl.⁴ : **E 04 C   1/39**, E 04 C   1/40

(54) Fertigteil zum Aufbau eines über seine Wände klimatisierten Gebäudes.

(43) Veröffentlichungstag der Anmeldung :
07.08.85 Patentblatt 85/32

(45) Bekanntmachung des Hinweises auf die Patenterteilung : 29.07.87 Patentblatt 87/31

(84) Benannte Vertragsstaaten :
AT BE CH DE FR GB IT LI LU NL SE

(56) Entgegenhaltungen :
DE-A- 3 146 650
DE-C-   812 832

(73) Patentinhaber : **Kesting, Lorenz**
**Holzheck 21**
**D-4600 Dortmund-Eving (DE)**

(72) Erfinder : **Kesting, Lorenz**
**Holzheck 21**
**D-4600 Dortmund-Eving (DE)**

(74) Vertreter : **Herrmann-Trentepohl, Werner, Dipl.-Ing. et al**
**Schaeferstrasse 18**
**D-4690 Herne 1 (DE)**

EP 0 150 242 B1

## Beschreibung

Die Erfindung betrifft ein Fertigteil zum Aufbau eines über seine Wände klimatisierten Gebäudes gemäß dem Oberbegriff des Anspruches 1 und ein mit derartigen Fertigteilen erstellte Wände aufweisendes Gebäude.

Die Teilklimatisierung eines Gebäudes, insbesondere eines Wohnhauses setzt meistens voraus, daß das Gebäude im Winter beheizbar ist, wenn es in einer Klimazone steht, welche entsprechend niedrige Außentemperaturen entstehen läßt und verlangt in Klimazonen mit hohen Außentemperaturen, daß das Gebäude wenigstens gekühlt werden kann. Die Vollklimatisierung eines Gebäudes erfordert, daß im jahreszeitlichen Wechsel geheizt und gekühlt wird. Wird das Medium, welches zur Wärmezufuhr und gegebenenfalls Wärmeabfuhr Verwendung findet, nicht über Heizkörper bzw. Kühlgeräte, sondern durch Wandkanäle, welche mindestens in den Außenwänden des Gebäudes, gegebenenfalls auch in seinen Geschoßdecken untergebracht sind, geführt, so ergeben sich in denklimatisierten Räumen des Gebäudes wand- bzw. deckengroße Wärmeaustauschflächen, welche die Möglichkeit eröffnen, einerseits eine gleichmäßige Temperaturverteilung in den Räumen und andererseits relativ geringe Unterschiede in den Vorlauf- und Rücklauftemperaturen des Heizmediums zu erreichen, welche ihrerseits günstige Wirkungsgrade der Klimatisierung gestatten und unter Umständen die Anwendung von Wärmepumpen-Heizungen wirtschaftlich machen. Bei derart klimatisierten Gebäuden sind Wandausbildungen, die ein gasförmiges, zum Wärmetransport dienendes Medium zulassen, in der Regel wesentlich günstiger als Gebäude, in denen Wärmeaustauscherrohre bzw. -schläuche zur Führung eines flüssigen Wärmetransportmediums verwendet werden müssen, bei dem es sich insbesondere um Warm- bzw. Heißwasser handelt. Das beruht nicht zuletzt auf der Gefahrvon Undichtigkeiten in der Mediumführung und den Schwierigkeiten, hierdurch ausgelöste Gebäudeschäden wieder zu beseitigen. Auch treten hohe Kosten für den Einbau von Rohren auf, welche die Voraussetzung für ein flüssiges Wärmemedium bilden.

Die Führung des deswegen vorzugsweise gasförmigen Wärmetransportmediums kann erfindungsgemäß im offenen Kreislauf erfolgen. Da dann jedoch wegen der geringen Differenz der Eintrittstemperatur und der Austrittstemperatur des Mediums jedenfalls bei der Beheizung des Gebäudes erhebliche Wärmeverluste auftreten können, betrifft die Erfindung insbesondere den Aufbau von Wänden, in denen ein geschlossener Kreislauf des Mediums stattfindet. Hierbei handelt es sich trotz der vertikalen Anordnung der Wandkanäle und der horizontalen Kanäle nicht um ein mit Naturzug betriebenes System, sondern um eine Zwangsumwälzung des gasförmigen Mediums. Da man gemäß der Erfindung die Wände erwärmt und dabei auf einen guten Wirkungsgrad bedacht ist, werden die Außenwände des Gebäudes in der Regel isoliert, um den Wärmeabfluß nach außen so weit wie möglich zu unterbinden.

Die Errichtung eines nach solchen Gesichtspunkten konzipierten Gebäudes aus Fertigteilen reduziert die an der Baustelle durchzuführenden Arbeiten auf das unbedingt erforderliche Maß und ermöglicht die im Ergebnis billigere, industrialisierte Herstellung bestimmter Baugruppen. Handelt es sich hierbei um geschoßhohe Wandelemente oder gar um eine durchgehende Außenhaut, dann ergeben sich eine Reihe von Nachteilen gegenüber Mauerwerk aus Kunststeinen, das auf der Baustelle aufgeführt werden muß. U. a. wirkt sich die im Großtafelbau notwendige Bewehrung der Wandelemente, welche beim Mauerwerk entfällt, nicht nur verteuernd aus, sondern vermehrt das an sich schon große Gewicht der ohnehin schwer zu transportierenden und einzubauenden Wandelemente noch weiter. Mauerwerk läßt auch eine Vielzahl von Abdichtungsschwierigkeiten nicht erst entstehen, die im Großtafelbau häufig nicht zu umgehen sind. Der relativ hohe Aufwand an Lohnkosten für qualifizierte Handwerker und für das zum Mauern benötigte Material läßt sich bei dem Früher allein üblichen Mauerwerk aus Normalsteinen erheblich durch die Verwendung von großformatigen Mauerkunststeinen senken, die gleichwohl keine Bewehrung erfordern. Hierbei werden unterschiedliche Abmessungen benutzt, jedoch sind großformatige Kunststeine aus Kalksandsteinen, Ziegeln, Bims und Beton durchaus üblich, wobei beispielsweise Steinhöhen zwischen 23,8 cm bis 50,3 cm im Längen zwischen 2,4 m bis 4,2 m Anwendung gefunden haben.

Die Erfindung setzt ein klimatisiertes Gebäude als vorbekannt voraus (DE-A-23 46 906). Die Außenwände und/oder die Innenwände dieses Gebäudes sind von den vertikalen, vom Keller bis zum Dach reichenden Kanälen durchdrungen, welche von dem gasförmigen Medium durchströmt werden, wobei man mit Hilfe von Drosseln die Mediumströme regeln kann. Es ist jedoch außerordentlich schwierig, ein solches Gebäude zu errichten. Außerdem hat sich herausgestellt, daß die Ausbildung vertikaler Kanäle in den Wänden allein noch keine Gewähr für die gewünschte gleichmäßige Temperaturverteilung auf den Wänden bietet. Das vorbekannte Gebäude erfüllt daher weder die Forderung nach einer gleichmäßigen Wärmeverteilung, welche für die Behaglichkeit der Klimatisierung erforderlich ist, noch die nach einem günstigen Wirkungsgrad der Klimatisierung welche für die Wirtschaftlichkeit eines derartigen Gebäudes ausschlaggebend ist.

Die Erfindung geht von einem ebenfalls vorbekannten Mauer kunststein zum Aufbau der Wände eines Klimatisierten Gebäudes aus (DE-A-3 146 650), welcher die Schwierigkeiten des Großtafelbaus nicht entstehen läßt, weil die Wände des Gebäudes mit einem Bindemauerwerk aufgeführt werden. Hierbei sind die Vertikalkanäle bildenden Aussparungen in den Mauersteinen einer folgenden Lage des Mauerwerks gegen die vertikalen Aussparungen der Mauersteine in der vorausgehenden Binderlage versetzt. Deswegen dienen die horizontalen Wandkanäle, welche in den horizontalen Mauerwerksfugen ausgebildet werden zur Umführung des Klimatisierungsmediums, das deswegen im Mauerwerk einer mäanderförmigen Bahn nach oben folgt. Ferner handelt es sich um Mauerkunststeine eines unbekannten Formats. Hierdurch ergeben sich Schwierigkeiten in der Einhaltung der Wirtschaftlichkeit bei der Errichtung des klimatisierten Gebäudes und eines günstigen Wirkungsgrades bei der Klimatisierung. Außerdem ist es schwierig, die Wandtemperaturen für die notwendige Behaglichkeit in den Räumen des Gebäudes ist.

Der Erfindung liegt die Aufgabe zugrunde, ein Fertgteil der bekannt vorausgesetzten Art zu schaffen, welches die an der Baustelle auszuführenden Arbeiten reduziert, um die Wirtschaftlichkeit beim Bauen zu erhöhen und außerdem eine Vereinheitlichung der Wandtemperaturen gestattet, welche die notwendige Behaglichkeit in den Räumen gewährleistet und einen günstigen Wirkungsgrad bei der Klimatisierung ermöglicht.

Diese Aufgabe löst die Erfindung mit den Merkmalen des Patentanspruches 1. Zweckmäßige Ausführungsformen der Erfindung sind Gegenstand der Unteransprüche.

Gemäß der Erfindung werden die günstigen Ergebnisse des Mauerns mit großformatigen Mauerkunststeinen für die Errichtung des Gebäudes nutzbar gemacht, wobei jedoch erfindungsgemäß die großformatigen Mauerkunststeine gleichzeitig durch die Ausbildung mehrerer, jeweils einen Abschnitt benachbarter vertikaler Wandkanäle bildender Aussparungen einen derart verringerten Abstand der vertikalen Heizkanäle ermöglichen, daß sich eine gleichmäßige Temperaturverteilung in den Steinen und über die Wand ergibt. Weiterhin wird die gleichmäßige Temperaturverteilung über die gesamte Wand des Gebäudes dadurch ermöglicht, daß die horizontalen Verbindungskanäle in den die horizontalen Mauerwerksfugen das Heizmedium gleichmäßig auf die vertikalen Wandkanäle verteilen. Der sich dadurch einstellende Temperaturausgleich der vertikalen Medienströme durch die Querströmung in der derart aufgemauerten Wand führt im Ergebnis dazu, daß die gewünschte gleichmäßige Temperaturverteilung auf der Wand über die Stein- und Fugenflächen erzielt wird.

Diese Wandkanäle stellen die mit den großformatigen Mauerkunststeinen bereits erzielte Wirtschaftlichkeit gemauerter Wände nicht infrage, sondern steigern diese weiter, weil an der Baustelle sie bereits während der Errichtung des Gebäudes zur Führung eines Heizmediums benutzt werden können. Das ermöglicht den Winterbau, wobei man mit Heißluftgebläsen die bereits fertiggestellten vertikalen bzw. horizontalen Kanäle in den teilerrichteten Wänden beaufschlagt. Es ist nämlich leicht, Rohre bzw. Schläuche an die zur Verfügung stehenden Mündungen der Kanäle anzuschließen und von diesen wieder zu entfernen.

Es hat sich herausgestellt, daß mit der Erfindung, trotz der vertikalen Fugen einen über die gesamte Wandbreite gleichmäßigen Abstand der vertikalen Heizkanäle herbeizuführen ist. Das begünstigt die Erlangung einer gleichmäßigen Wandtemperatur in erheblichem Maße.

Die Wirtschaftlichkeit bei der Errichtung des Gebäudes läßt sich ferner mit den Merkmalen des Anspruches 2 wesentlich steigern. Bei dieser Ausführungform der Erfindung wird die für die Wirtschaftlichkeit der Klimatisierung entscheidende Außenisolierung der das Medium führenden Wände bereits bei der industrialisierten Fertigung weitgehend fertiggestellt, so daß für die Baustelle nur noch geringfügige Arbeiten übrig bleiben. Eine noch weitergehendere Rationalisierung der Arbeiten an der Baustelle ermöglicht die Ausführungsform nach Anspruch 3, weil hierbei nicht nur eine zweckmäßige Befestigung der Wärmeisolierung auf dem Mauerkunststein möglich ist, sondern das Befestigungsmittel auch an der Baustelle für die Befestigung einer Warm- oder Kaltfassade benutzt werden kann.

Es ist natürlich zweckmäßig, die Wandkanäle möglichst glatt auszuführen, um die Strömungswiderstände in den durchströmten Gebäudewänden herunterzudrücken. Das ist wegen der großen Formate der erfindungsgemäßen Mauerkunststeine in der Regel nur möglich, wenn man wenigstens die größeren Aussparungen, d.h. die Aussparung für die Wandkanäle innen mit Hilfe von Dornen offen hält. Zweckmäßig ist daher die Ausbildung nach Anspruch 4, weil dadurch das Herausziehen der Dorne aus der Masse des großformatigen Mauersteins erheblich erleichtert wird.

Mit den Merkmalen des Anspruches 5 werden in dem fertigen Mauerwerk jeweils über einer horizontalen Fuge mit Hilfe der trichterförmig erweiterten Aussparungen für die senkrechten Wandkanäle günstigere Verhältnisse für die Führung des gasförmigen Heizmediums geschaffen.

Es empfiehlt sich auch, die senkrechten Fugenseiten der erfindungsgemäßen Mauerkunststeine mit je einer durchgehenden Vertiefung zu versehen. Dadurch entsteht nämlich eine Verzahnung der Steine mit dem die senkrechten Fugen ausfüllenden Fugenmörtel, wodurch die Standsicherheit des Mauerwerks wesentlich erhöht wird.

Die Einzelheiten, weiteren Merkmale und andere Vorteile der erfindungsgemäßen Fertigteile sowie eines aus derartigen Fertigteilen aufgemauerten Gebäudes ergeben sich aus der nachfolgenden Beschreibung von Ausführungsformen der Erfindung anhand der Figuren in der Zeichnung ; es zeigen

Figur 1 eine Vorderansicht eines Fertigteils gemäß der Erfindung,

Figur 2 ein Schnitt des Gegenstandes der Figur 1 nach der Linie II-II

Figur 3 eine Draufsicht auf den Gegenstand, der in den Figuren 1 und 2 dargestellt ist,

Figur 4 perspektivisch einen Mauerverband, der mit Fertigteilen nach den Figuren 1 bis 3 hergestellt wird,

Figur 5 in der Figur 4 entsprechender Darstellung einen Teil einer Wand eines Gebäudes, das mit derartigen Fertigteilen errichtet ist,

Figur 6 eine Draufsicht auf den mit dem Fenster nach Figur 5 versehenen Teil der Außenwand,

Figur 7 schematisch die Darstellung der Klimatisierungsanlage, die im Kellergeschoß des Gebäudes und in dessen Dachgeschoß untergebracht ist,

Figur 8 schematisch und zur Verdeutlichung des Mediumkreislaufes ein Gebäude gemäß der Erfindung,

Figur 9 eine Einzelheit der Wandausbildung längs einer der Fugen des Mauerwerks und

Figur 10 einen Teil eines Ringbalkens mit anschliessender Geschoßdecke in einem Gebäude gemäß der Erfindung, wobei die Teile im senkrechten Schnitt wiedergegeben sind.

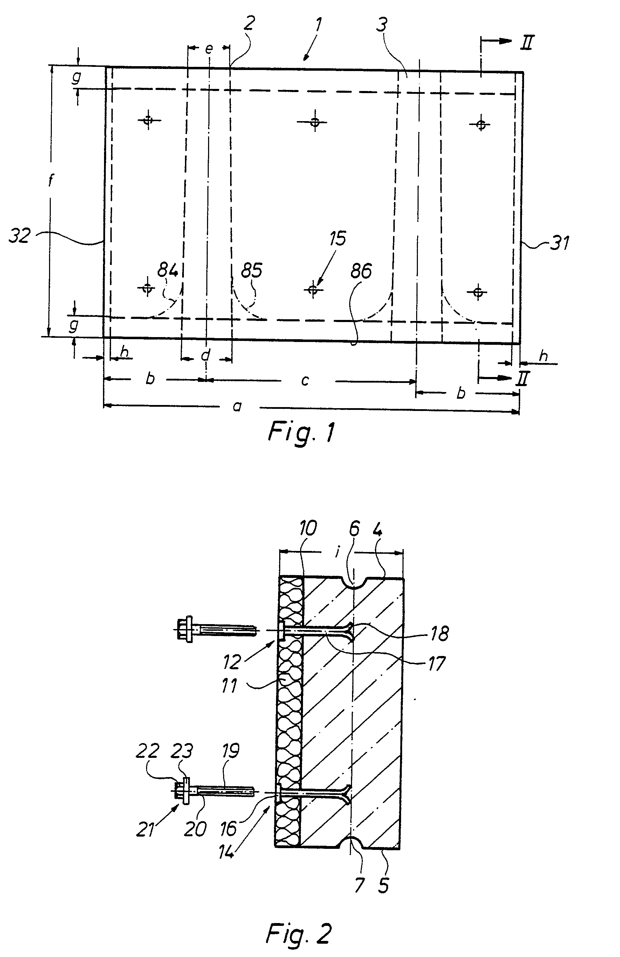

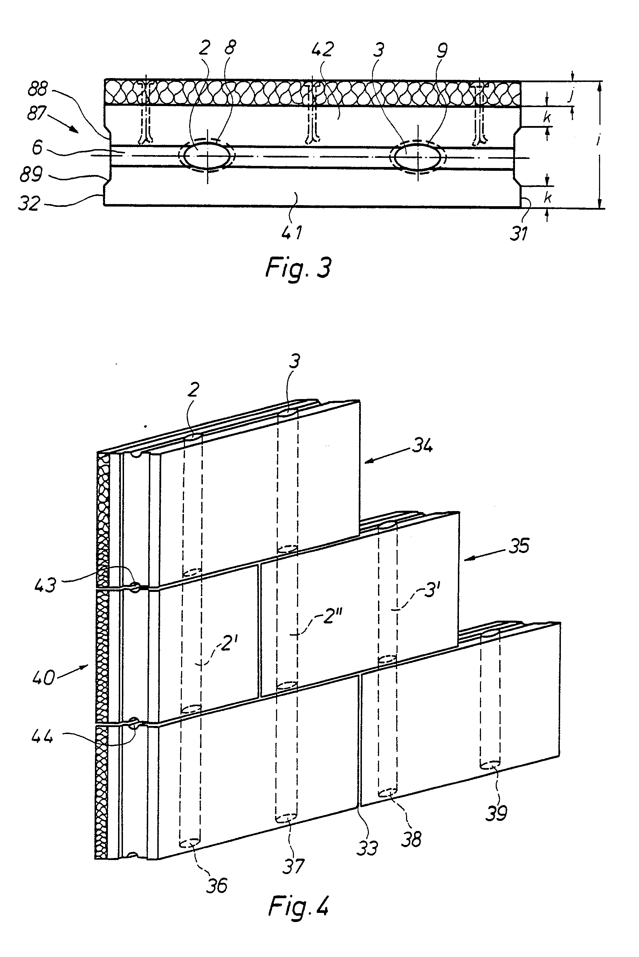

Das in den Zeichnungen wiedergegebene Fertigteil wird von einem großformatigen Mauerkunststein 1 gebildet. Dieser besitzt zwei je einen Abschnitt benachbarter vertikaler Wandkanäle bildende Aussparungen 2, 3 (Fig. 3) und je einen in jeder die horizontalen Mauerwerksfugen begrenzenden Steinflächen 4, 5 ausgebildete Halbrohrvertiefungen 6 bzw. 7 (Fig. 2). Hierbei handelt es sich um halbrunde Nuten, so daß sich ein im wesentlichen kreisförmiger Querschnitt nach Aufführung des Mauerkwerks aus zwei benachbarten Steinen ergibt. Wie die Darstellung der Fig. 3 erkennen läßt, zeigt diese Halbrohrvertiefung 6, 7, wie am Beispiel der Halbrohrvertiefung 6 wiedergegeben, die Mündugen 8 bzw. 9 der Aussparungen 2, 3.

Zur Verdeutlichung der Formates des Mauerkunststeines gemäß der Ausführungsform in den Fig. 1 bis 3 der Erfindung werden nachstehend beispielsweise Abmessungen wiedergegeben :

a = 1,0 m
b = 24,75 cm
c = 50,5 cm
d = 12 cm
e = 10 cm
f = 64 cm
g = 5 cm
h = 1,5 cm
i = 30 cm
j = 6 cm
k = 5 cm

Die vorstehend wiedergegebenen Abmessungen sind natürlich nur beispielsweise. Sie ergeben aber das durchschnittliche Steinformat, das sich danach wesentlich von dem sogenannten Normalsteinen unterscheidet, der Kantenlängen von 6,5 × 12 × 25 cm aufweist und dessen Abmessungen sich wie 1 : 2 : 4 verhalten.

An der der späteren Fassadenseite des Gebäudes zugeordneten Mauersteinseite (Fig. 2 und 3), die in Fig. 2 mit 10 bezeichnet ist, trägt der Mauerkunststein 1 eine wärmeisolierende Platte, die beispielsweise aus Styroporkunststoff bestehen kann und mit 11 bezeichnet ist. Diese Platte ist, wie die Darstellung der Fig. 2 erkennen läßt, mit Hilfe von Ankern 12 bzw. 14 befestigt, welche nach dem aus Fig. 1 ersichtlichen Lochschema, das mit dem Pfeil 15 identifiziert ist, verteilt angeordnet sind. Diese Anker besitzen flache Köpfe 16, je einen Ankerschaft 17 und gespreizte Enden 18. Die Herstellung eines derartigen Mauerkunststeines kann z. B. aus einem Gemenge wie Beton geschehen. Dazu benutzt man eine Schalform, die nicht wiedergegeben ist, die aber mit ihren vier Wänden die Schmalseiten des Steines abformt. In den Boden einer solchen Form legt man die mit den Ankern 12, 14 versehene wärmeisolierende Platte 11 ein und orientiert dabei die flachen Ankerköpfe 16 zum Formboden. Danach wird das Gemenge eingegossen und erhärtet um den Schaft und das Ende 17, 18 jedes Ankers.

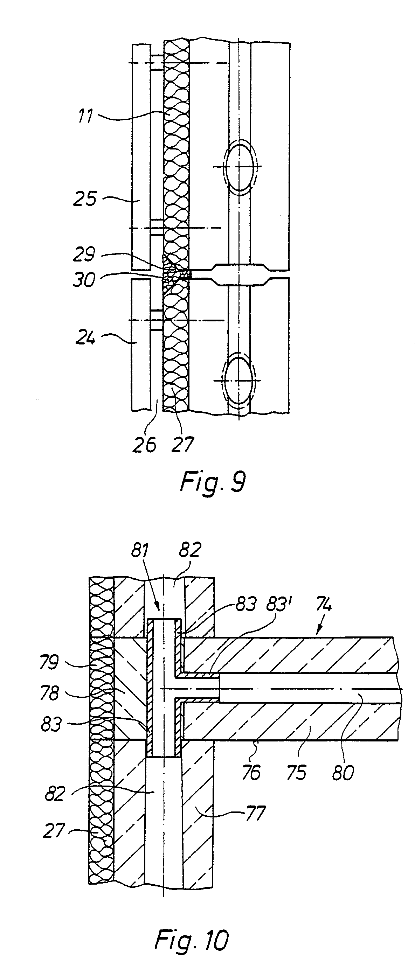

Der Schaft 17 ist gemäß der Ausführungsform nach Fig. 2 hohl ausgebildet. Er dient als Spreizhülse für einen mit Außengewinde 19 versehenen Schaft 20 eines Bolzens 21 mit Sechskantkopf 22 und Unterlegscheibe 23. Eine der Anzahl der Anker 12, 14 entsprechende Zahl von Bolzen 21 dient gemäß der Darstellung nach Fig. 9 zur Anbringung von Einzelelementen 24 bzw. 25 einer Kaltfassade. Bekanntlich versteht man hierunter eine Fassade mit einem Luftspalt 26 zwischen der Außenseite der allgemeinen mit 27 bezeichneten Wärmeisolierung. Die Fassadenelemente 24, 25 werden durch diese Konvektionsströmung von hinten gekühlt und können sich daher unter Sonneneinstrahlung nicht verziehen. Allerdings ist die Ausbildung einer Kaltfassade mit Elementen 24, 25 in der Ausbildung nach Fig. 9 für die Verwirklichung der Erfindung nicht Voraussetzung. Es lassen sich auch Warmfassaden verwirklichen, bei denen die Fassadenelemente unmittelbar auf der Wärmeisolierung aufliegen.

Wie sich ferner aus der Darstellung der Fig. 9 ergibt, sind die Außenkanten der wärmeisolierenden Platten 11 abgefast. Es ergeben sich dadurch an den Fugen des Mauerwerks, wie bei 29 gezeichnet, Füllnähte 30, auf deren Herstellung an der Baustelle sich die Wärmeisolierung der Wand beschränken kann. Sie erfolgt vorzugsweise mit einem flüssigen, aushärtenden Kunststoff.

Vergleicht man die eingangs wiedergegebenen Abmessungen der Maße a bis c, so ergibt sich, daß die beiden Aussparungen 2, 3 für die vertikalen Wandkanäle in bestimmter Weise in den Mauerkunststeinen 1 angeordnet sind. Jede der Aussparungen 2, 3 ist nämlich von der ihr benachbarten senkrechten Fugenseite 31 bzw. 32 (Fig. 1) jeweils um etwa die Hälfte ihres Abstandes c von der anderen Ausparung entfernt angeordnet, und der gegenseitige Abstand c der Aussparungen 2, 3 entspricht der Summe ihrer Abstände d von den senkrechten Fugenseiten 31, 32 zuzüglich der Fugenbreite. Die Breite dieser senkrechten Fugen, von denen eine in Fig. 4 mit 33 bezeichnet ist, kann relativ gering sein. Im Ausführungsbeispiel beträgt sie 1 cm und gestattet demgemäß in dem in Fig. 4 dargestellten Binderverband die automatische Ausfluchtung der Aussparungen 2, 3 der jeweils oberen Lage 34 mit den bei 2' bzw. 2" wiedergegebenen Aussparungen der darunter liegenden Binderlage 35. Dieses Schema gilt natürlich auch für die Aussparungen 3', die mit den Aussparungen 2 der oberen Lage 34 ausgefluchtet werden. Auf diese Weise entstehen die vertikalen Wandkanäle 36 bis 39 nach Fig. 4 bei der Aufführung des Binderverbandes, der allgemein mit 40 bezeichnet ist. Das Eindringen von Fugenmörtel in die Mündungen der Aussparungen 2, 3 beim Aufführen des Mauerwerkes läßt sich zuverlässig ausschließen, weil sich die Verteilung des Fugenmörtels auf die Steinflächen 41, 42 (Fig. 3) beschränken kann, ohne daß dadurch besonders hohe Anforderungen an das können des Maurers gestellt werden. In den horizontalen Fugen 33 (Fig. 4) kann man die späteren Verbindungskanäle in dem Fugenmörtel durch in die horizontalen Verbindungskanälen 43, 44 eingelegte und später entfernbare Schläuche offenhalten, die man aber auch nicht unbedingt benötigt. Hilfsmittel zum Offenhalten der Mündungen 8, 9 der vertikalen Aussparungen 2, 3 beim Mauern der horizontalen Fugen sind ebenfalls möglich und können aus Stahlplättchen bestehen, die man nach dem Aufführen der Binderlagen und vor dem vollständigen Erhärten der Fugenmörtels herauszieht. Die vertikalen Fugen enthalten sonst keine offen zu haltenden Kanäle mit Ausnahme der sie querenden Verbindungskanäle, wobei die Querungen wie diese offengehalten werden können.

Im Winterbau kann man das Mauerwerk ausführen, weil sich in die Mündungen der horizontalen Wandkanäle 43, 44 Heißluft aus einem an der Baustelle aufgestellten Gebläse einleiten läßt, mit der man die Fugen so lange erwärmt, bis der Mörtel erhärtet ist.

Wie man im übrigen aus der Darstellung der Fig. 1 erkennen kann, sind die Aussparungen 2, 3 einseitig konisch ausgebildet, was zum Entschalen einer diese Aussparungen offen haltenden Schalung aus dem erhärteten Stein günstig ist.

Bei 84 und 85 sind in Fig. 1 die der unteren Fugenseite 86 zugeordneten trichterförmigen Erweiterungen einer Ausführungsform der Erfindung wiedergegeben , bei der diese Ausgestaltung der Aussparungen 2, 3 zur Verbesserung der Strömung durch die horizontalen Wandkanäle in die vertikalen Wandkanäle dient.

Die Darstellung der Fig. 3 läßt darüberhinaus in den vertikalen Fugenseiten übereinstimmende Vertiefungen 87 erkennen, die nutförmig sind. Diese Nuten haben eine ebene Grundfläche 88 und schräg nach außen weisende Nutwände, von denen eine mit 89 bezeichnet ist. Hierdurch tritt eine Verklammerung des Mauerwerkes quer zur Wand durch die spätere vollständige Ausfüllung der vertikalen Fugen ein, soweit sich diese über die vertikalen Fugenflächen 31, 32 der Mauersteine erstrecken.

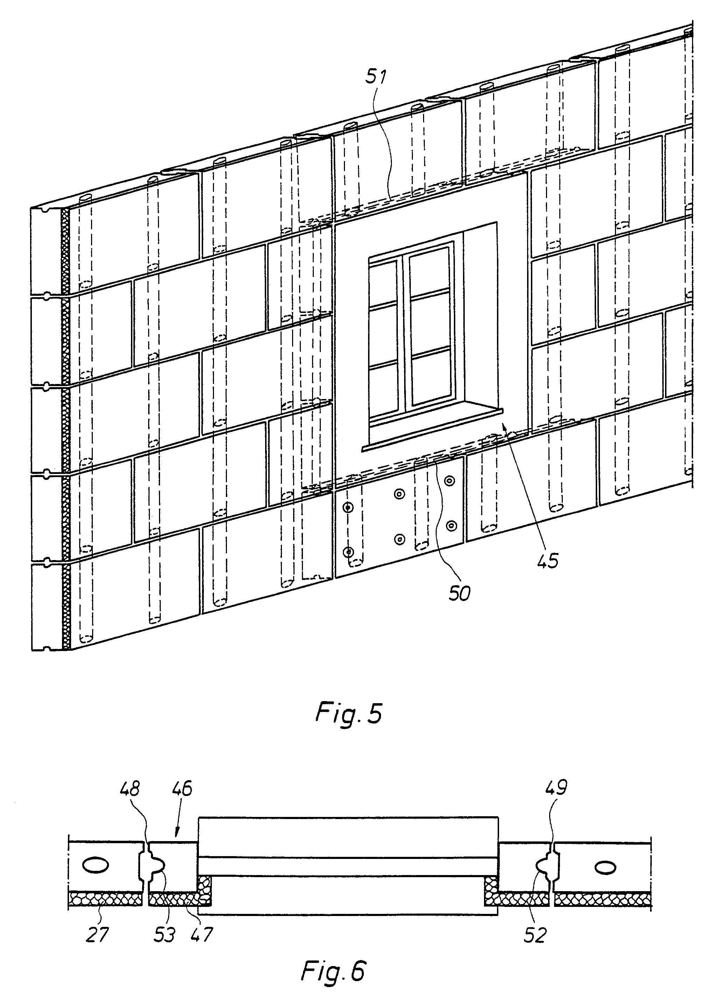

Wie die Darstellung der Fig. 5 zeigt, werden im Bereich der Fenster 45 — und gegebenenfalls im Bereich von Türen — Wärme-bzw. Kältebrücken vermieden. Dazu wird ein ebenfalls aus Beton oder einem anderen Kunststein vorgefertigter Laibungsrahmen 46 (Fig. 6) verwendet. Dieser trägt auf seinen Fassadenflächen eine wärmeisolierende Schicht 47, welche die wärmeisolierende Schicht 27 der Außenfront bis in die Fensterlaibung fortsetzt. Die im Mauerwerk liegenden Außenkanten 48 bzw. 49 und 50 bzw. 51 (Fig. 5) sind mit Nuten 52, 53 zur Ausbildung senkrechter Strömungskanäle versehen, welche über die in sie mündenden horizontalen Kanäle mit dem Heizmedium beaufschlagt werden. Entsprechende Nuten sind in den horizontalen Seiten der Rahmenglieder ausgebildet, so daß der gesamte Laibungsrahmen an der Wandbeheizung teilnimmt.

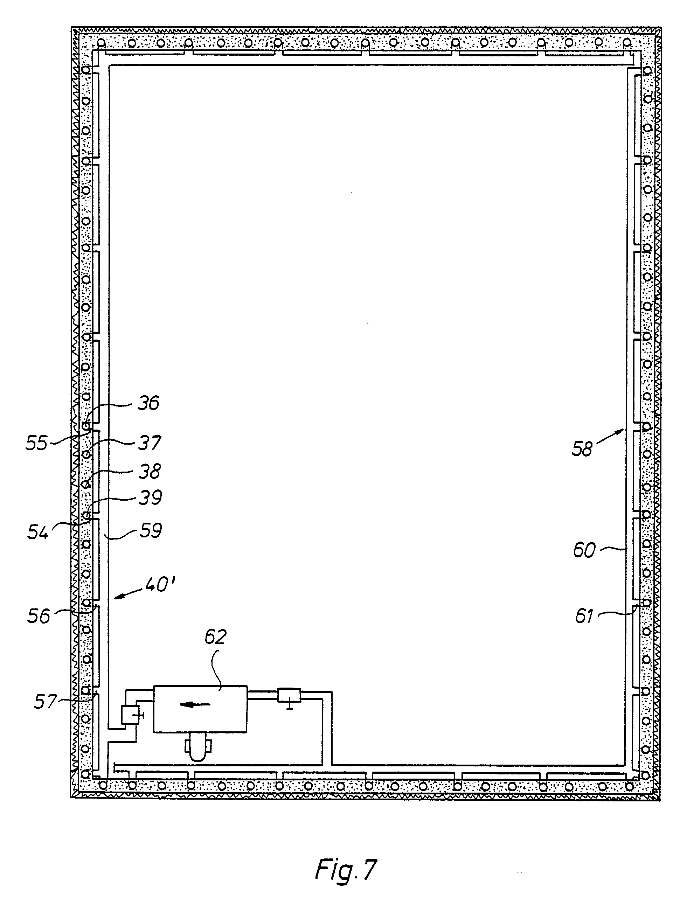

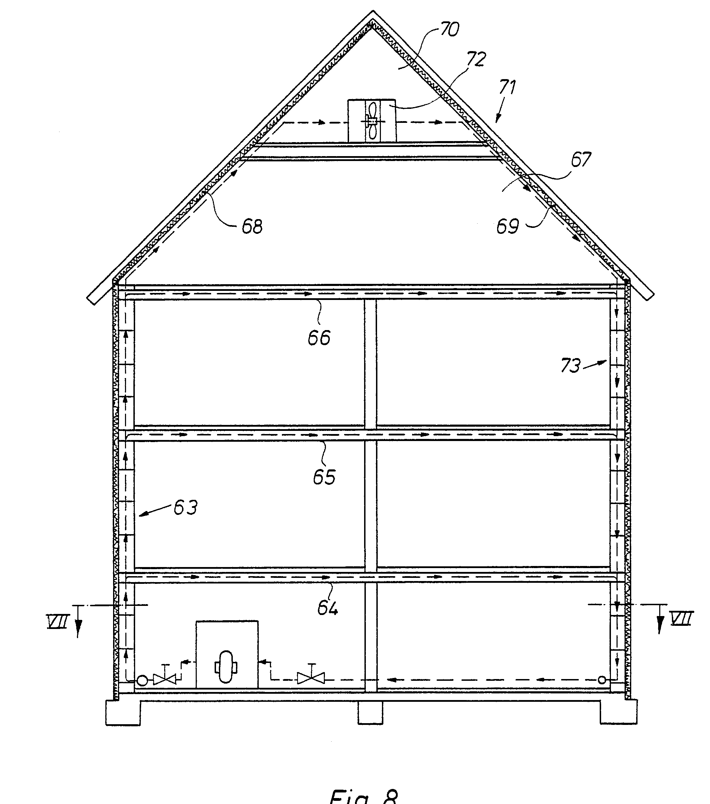

Die Darstellung der Fig. 7 stellt einen Schnitt längs der Linie VII-VII der Fig. 8 dar. Hieraus erkennt man die Vielzahl der in dichtem Abstand nebeneinander angeordneten vertikalen Strömungskanäle für das gasförmige Heizmedium, die mit den Bezugszeichen 36 bis 39 gekennzeichnet sind. Dabei handelt es sich um die Wiedergabe benachbarter vertikaler Wandkanäle, anhand deren die Heizkreisverteilung zu erkennen ist. Der Heizkreisverteiler 40' dient zur Zuführung des aufgeheizten Heizmediums, beaufschlagt aber lediglich jeden dritten Wandkanal über eine Querbohrung 54 bzw. 55 und einen in diese mündenden Rohrstutzen 56, 57 des Verteilerrohres 59. Diese Möglichkeit, nur einen Bruchteil der vertikalen Wandkanäle an ihrem unteren Ende an den Heizkreisverteiler 40' anzuschließen, läßt sich noch weiter ausnutzen, weil die horizontalen Wandkanäle 43, 44 für eine gleichmäßige Verteilung des Heizmediums und damit eine Überführung des Mediums in die nicht unmittelbar an den Heizkreisverteiler angeschlossenen vertikalen Wandkanäle sorgen.

Gemäß der Darstellung in den Fig. 7 und 8 ist das Gebäude mit einem Vorlaufsystem versehen, das über den Heizkreisverteiler 40' beschickt wird und weist außerdem ein über den Heizkreisverteiler 58 beschicktes Rücklaufsystem auf, so daß ein Mediumkreislauf einstellt. Der Heizkreisverteiler 58 ist ebenso wie der Heizkreisverteiler 40 aus einem Hauptrohr 60 mit in vorgegebenen Abständen angeordneten Abgängen aus Rohrstutzen 61 versehen, wobei wiederum die horizontalen Wandkanäle 43, 44 für die Verteilung des rückströmenden Mediums in die nicht an den Verteiler 59 angeschlossenen vertikalen Wandkanäle sorgen. Das Aggregat 62 dient bei einer Teilklimatisierung in Klimazonen mit tiefen Außentemperaturen zur Aufheizung des Mediums, wobei es sich in der Regel um Luft handelt. Es kann auch gleichzeitig ein Kühlaggregat besitzen, so daß sich das Haus im Sommer kühlen läßt. Das Medium strömt in dem Vorlauf 63 (Fig. 8) durch die vertikalen Wandkanäle des Vorlaufsystems nach oben und durchquert dabei zum Teil auch die Decken 64 bis 66 des Gebäudes. Soweit die durch feste oder einstellbare Drosseln geregelte Strömung das Dachgeschoß erreicht, werden auch die im ausgebauten Dachgeschoß 67 vorhandenen schrägen Wände 68, 69 in der Weise mit dem Heizmedium beaufschlagt, wie das bei den senkrechten Wänden erläutert worden ist. Allerdings wird man das Dach in der Regel mit Hohldielen auskleiden, die man entsprechend außen isoliert.

Im nicht ausgebauten Firstbereich 70 des Satteldaches 71 steht ein Gebläse 72, welches für einen Zwangsumlauf des Heizmediums in das abwärts gerichtete Rücklaufsystem 73 dient.

Der hiernach erforderliche Anschluß der Hochldecken an die vertikalen und horizontalen Wandkanäle ergibt sich aus der Darstellung der Fig. 10. Hierbei wird eine aus Beton bestehende Hohldeckenplatte 74 in Fertigbauweise aus bewehrtem Beton 75 eingesetzt. Diese liegt mit ihrem Außenrand 76 auf der bei 77 wiedergegebenen Binderlage des Mauerwerks auf und begrenzt den üblichen Ringbalken 78 nach innen, welcher seinerseits mit einer Isolierschicht 79 versehen ist, welche die Außenisolierung 27 des Mauerwerks fortsetzt. Die parallelen, horizontalen Deckenkanäle werden einzeln, wie am Beispiel des aus Fig. 10 ersichtlichen horizontalen Deckenkanals 80 ersichtlich, mit Hilfe von T-förmigen Verbindungsrohren 81 an den in Fig. 10 ersichtlichen und dort mit 82 bezeichneten vertikalen Wandkanal angeschlossen. Diese T-Stücke 81 sitzen mit beiden Enden ihres Durchgangsrohres 83 in den miteinander der ausgefluchteten Aussparungen der die Mauerlage bildenden Steine und mit ihrem Blindrohr 83' im Ende des betreffenden horizontalen Deckenkanals.

Zweckmäßig baut man die beschriebenen Drosseln zur Regelung des Mediumstromes in den unteren Zweig des betreffenden vertikalen Wandkanals ein.

## Patentansprüche

1. Mauerkunststein zum Aufführen von Wänden im Binderverband eines klimatisierten Gebäudes, in dem der Mauerkunststein wenigstens zwei Aussparungen (2, 3) aufweist, die im Gebäude je einen Abschnitt benachbarter, vertikaler paralleler Wandkanäle (36-39) bilden, auf die sich ein vorzugsweise gasförmiges Klimatisierungsmedium verteilt und die in Vertiefungen münden, welche jeweils in horizontale Mauerwerksfugen begrenzenden Steinflächen ausgebildet sind und die Aussparungen unter Ausbildung horizontaler Verbindungskanäle der vertikalen Wandkanäle queren, wobei an der Fassadenseite des Gebäudes eine Wärmeisolierung vorgesehen ist, dadurch gekennzeichnet, daß die vertikalen Wandkanäle (36-39) des Gebäudes von den beim Aufführen des Binderverbandes ausgefluchteten Aussparungen (2, 3) gebildet sind, die in jedem Mauerkunststein (1) von der ihnen jeweils benachbarten, senkrechten Fugenseite (4, 5) um etwa die Hälfte ihres Abstandes (c) von der anderen Aussparung entfernt angeordnet sind und voneinander einen Abstand (c) aufweisen, der die Summe ihrer Abstände (b) von den Fugenseiten (4, 5) ist, wobei die horizontalen Wandkanäle (43, 44) zur Verteilung des Heizmediums auf die nicht an Heizkreisverteiler (40') angeschlossenen vertikalen Wandkanäle dienen und die gegenseitigen Abstände der horizontalen Vertiefungen und der gegenseitige Abstand (c) der Aussparungen (2, 3) zur Vergleichmäßigung der Temperaturverteilung in der Gebäudewand in einem von den Normalsteinen abweichenden Großformat des Mauerkunststeines (1) gewählt sind.

2. Mauerkunststein nach Anspruch 1, dadurch gekennzeichnet, daß an der der Fassadenseite des Gebäudes zugeordneten Mauersteinseite (10) eine wärmeisolierende Platte (11) befestigt ist.

3. Mauerkunststein nach Anspruch 1 oder 2, dadurch gekennzeichnet, daß die wärmeisolierende Platte (11) mit Hilfe mehrerer, in dem Kunststeinmaterial und der Platte sitzender Anker (14) befestigt ist, welche Dübel für Befestigungsbolzen (21) eines Elementes (24, 25) einer Kalt- oder Warmfassade des Gebäudes bilden.

4. Mauerkunststein nach einem der Ansprüche 1 bis 2, dadurch gekennzeichnet, daß die Aussparungen (2, 3) für die vertikalen Wandkanäle (36-39 ; 82) einseitig konisch sind und die Öffnungen in der unteren Fugenbegrenzungsseite (5) des Mauerkunststeines (1) münden.

5. Mauerkunststein nach einem der Ansprüche 1 bis 4, dadurch gekennzeichnet, daß die Aussparungen (2, 3) an einem ihrer Enden trichterförmige Erweiterungen (84, 85) aufweisen.

6. Mauerkunststein nach einem der Ansprüche 1 bis 5, dadurch gekennzeichnet, daß die senkrechten Fugenseiten (31, 32) jeweils eine durchgehende Vertiefung (87-89) aufweisen.

7. Aus Mauerkunststeinen nach einem der Ansprüche 1 bis 6 gemauertes Gebäude, gekennzeichnet durch im einfachen Mauerverband aufgeführte Außenwände, welche in den horizontalen Fugen jeder im Binderverband (40) ausgeführten Lage (34, 35) einen mörtelfreien Verbindungskanal (43, 44) zu den sämtlich mörtelfreien Vertikalkanälen (36-39 ; 82) eines Vorlauf- und Rücklaufkanalsystems (63, 73) aufweisen, von denen einige im Unter- bzw. Kellergeschoß an einen das vorlaufende Medium zuführenden und einige an einen weiteren, das rücklaufende Medium führenden Heizkreisverteiler (40', 58) angeschlossen sind, wobei die in den Mauern verlaufenden Vertikalkanäle (36-39 ; 82) jedes Kanalsystems (63, 73) durch ein aus in den Hohldecken (64-66) und gegebenenfalls zwischen den schrägen Wänden (68, 69) eines ausgebauten Dachgeschosses (67) verlaufenden Kanälen bestehendes Verbindungskanalsystem aneinander angeschlossen sind.

8. Gebäude nach Anspruch 7, dadurch gekennzeichnet, daß für die Fenster (45) bzw. Türen Laibungsrahmen vorgesehen sind, die fuenseitig mit Nuten (52, 53) zu der Ausbildung von vertikalen und horizontalen Wandkanälen versehen sind, welche an die in den Mauersteinen (1) verlaufenden kanäle angeschlossen sind.

## Claims

1. An artificial brick for building walls in the heading bond of an air-conditioned building, in which the artificial brick has at least two recesses (2, 3) that form in the building one section of adjacent vertical parallel wall channels (36-39) over which a preferably gaseous air-conditioning medium is distributed and which open into depressions that are each formed in brick surfaces limiting horizontal brick joints and cross the recesses to form horizontal channels connected the vertical wall channels, thermal insulation being provided on the facade side of the building, characterized in that the vertical wall channels (36-39) of the building are formed by the recesses (2, 3) aligned when the heading bond is built, said recesses being disposed in each artificial brick (1) spaced away from the adjacent vertical joint side (4, 5) by approximately half their distance (c) from the other recess, and mutually spaced by a distance (c) equal to the sum of their distances (b) to the surfaces (4, 5) and the joint width, the horizontal wall channels (43, 44) serving to distribute the heating medium over the vertical wall channels not connected to heating circuit distributors (40), and the distances between the horizontal depressions and the distance (c) between the recesses (2, 3) being selected to even out the temperature distribution in the building wall in a large format of the artificial brick (1) deviating from the standard bricks.

2. An artificial brick according to claim 1, characterized in that a thermally insulating plate (11) is mounted on the brick side (10) associated with the facade side of the building.

3. An artificial brick according to claim 1 or 2, characterized in that the thermally insulating plate (11) is mounted with the aid of a plurality of anchors (14) seated in the artificial brick material and the plate and forming dowels for fastening bolts (21) of an element (24, 25) of a cold or warm facade of the building.

4. An artificial brick according to any of claims 1 to 3, characterized in that the recesses (2, 3) for the vertical wall channels (36-39 ; 82) are conical on one side and the openings open on the lower joint limiting side (5) of the artificial brick (1).

5. An artificial brick according to any of claims 1 to 4, characterized in that the recesses (2, 3) have funnel-shaped widened portions (84, 85) at one end.

6. An artificial brick according to any of claims 1 to 5, characterized in that the vertical joint sides (31, 32) each have a continuous depression (87-89).

7. A building bricked up with artificial bricks according to any of claims 1 to 6, characterized by outer walls built in a simple wall bond which have in the horizontal joints of each layer (34, 35) built in the heading bond (40) a connecting channel (43, 44) free from mortar to the vertical channels (36-39 ; 82), that are all free from mortar, of a flow and return channel system (63, 73), some of which are connected on the bottom or basement floor with a heating circuit distributor (40', 58) that supplies the flowing medium and some of which are connected with a further heating circuit distributor (40', 58) that conducts the returning medium, the vertical channels (36-39 ; 82) of each channel system (63, 73) extending in the walls being connected to one another by a connecting channel system comprising channels extending in the hollow ceilings (64-66) and, if applicable, between the sloping walls (68, 69) of a finished garret story (67).

8. A building according to claim 7, characterized in that reveal frames are provided for the windows (45) or doors, said frames being provided on the joint side with grooves (52, 53) to form vertical and horizontal wall channels which are connected to the channels extending in the bricks (1).

## Revendications

1. Pierre de construction pour murer en appareil à boutisse les murs d'un bâtiment climatisé, présentant au moins deux rainures (2, 3) dont chacune forme une section respective de canaux muraux (36-39) voisins, parallèles et verticaux, ces canaux muraux constituant le système climatique dans lequel se répand un milieu de climatisation préférablement gazéiforme et débouchant dans des creusements qui sont formés respectivement dans des surfaces de pierres délimitant des joints de briques horizontaux et qui croisent les rainures en formant des canaux horizontaux de raccordement pour les canaux muraux verticaux, une isolation calorifuge étant prévue sur la face du bâtiment, caractérisée en ce que les canaux muraux verticaux (36-39) du bâtiment sont constitués par les rainures (2, 3) alignées au cours de la construction de l'appareil à boutisse, ces rainures (2, 3) étant disposées, dans chaque pierre de construction (1), à une distance aux bords de joint (4, 5) verticaux voisins respectifs d'environ la moitié de la distance (c) entre elles-mêmes, et présentant une distance (c) entre elles-mêmes correspondant à la somme des distances (4, 5) et de la largeur du joint, les canaux muraux horizontaux (43, 44) assurant la distribution du milieu calorifique aux canaux muraux verticaux sans raccordement aux distributeurs du circuit thermique (40), et les distances des creusements horizontaux l'un à l'autre ainsi que la distance (c) entre les rainures (2, 3) étant choisies en un format grand de la pierre de construction (1) s'écartant du format des briques normales, afin de rendre uniforme la répartition calorifique.

2. Pierre de construction selon la revendication 1, caractérisée en ce qu'un panneau calorifuge (11) est fixé à la face de brique (10) correspondant à la façade du bâtiment.

3. Pierre de construction selon la revendication 1 ou 2, caractérisée en ce que le panneau calorifuge (1) est fixé à l'aide de plusieurs épingles d'ancrage (14) situées dans le matériau de la pierre de construction et dans le panneau et constituant des chevilles pour des boulons de serrage (21) d'un élément (24, 25) d'une façade froide ou chaude d'un bâtiment.

4. Pierre de construction selon l'une quelconque des revendications 1 à 3, caractérisée en ce que les rainures (2, 3) pour les canaux muraux verticaux (36-39 ; 82) sont coniques d'un côté et les orifices mènent à la face inférieure de délimitation du joint (5) de la pierre de construction (1).

5. Pierre de construction selon l'une quelconque des revendications 1 à 4, caractérisée en ce que les rainures (2, 3) présentent, à un de leurs bouts, des évasements (84, 85).

6. Pierre de construction selon l'une quelconque des revendications 1 à 5, caractérisée en ce que les bords de joint verticaux (31, 32) présentent chacun un creusement (87-89) montant de fond.

7. Bâtiment construit à pierres de construction selon l'une quelconque des revendications 1 à 6, caractérisé en ce que les murs extérieurs sont construits en appareil de briques simple et présentent, dans les joints horizontaux de chaque couche (34, 35) réalisée en appareil à boutisse (40), un canal de raccordement (43, 44) sans mortier menant aux canaux verticaux (36-39 ; 82) — les tous sans mortier — d'un système de canaux pour l'alimentation et le retour (63, 73), dont certains sont raccordés, au rez-de-chaussée ou au sous-sol, respectivement à deux distributeurs (40', 58) du système de chauffage amenant le milieu alimenté ou conduisant le milieu de retour, les canaux verticaux (36-39 ; 82) de chaque système de canaux (63,, 73), disposés dans les murs, étant reliés l'un à l'autre, par un système de canaux de raccordement se constituant de canaux qui s'étendent dans les plafonds creux (64-66) et, le cas échéant, entre les parois obliques (68, 69) d'un étage mansardé (67) achevé à l'intérieur.

8. Bâtiment selon la revendication 7, caractérisé en ce que des châssis sont prévus, pour les fenêtres (45) et les portes, présentant, du côté du joint, des rainures (52, 53) formant des canaux muraux verticaux et horizontaux, ces canaux étant reliés aux canaux établis dans les pierres de construction (1).

Fig. 1

Fig. 2

Fig. 3

Fig. 4

*Fig. 5*

*Fig. 6*

*Fig.7*

4

Fig. 8

Fig. 9

Fig. 10